# DEMANDE DE BREVET EUROPEEN

(11) **EP 2 587 399 A1**
(43) Date de publication de la demande: **01.05.2013**
(21) Numéro de dépôt: 12190433.8
(22) Date de dépôt: 29.10.2012
(51) Int. Cl.: G06F 21/00, H04L 29/06

(54) **Procédé de transmission de données d'un premier réseau vers une pluralité de réseaux destinataires de niveaux de sécurités hétérogènes**

(30) Priorité: 31.10.2011 FR 1103313
(71) Demandeur: Thales, 92200 Neuilly Sur Seine (FR)
(72) Inventeur: Leleu, Philippe, 92622 GENNEVILLIERS cedex (FR)
(74) Mandataire: Labatte, Laurent

(57) **Abrégé**

La présente invention concerne un procédé de transmission sécurisé d'ensembles de données (165, 175) d'un même premier système d'information (SI) (110) vers une pluralité de SI destinataires (120, 130) de niveaux de sécurité hétérogènes, au moins un premier ensemble de données (165) étant destiné à un SI différent (120) du SI destinataire (130) d'un deuxième ensemble de données (175). Par « sécurisé », on entend que le procédé prend en compte les risques de compromission de donnée d'un domaine de sécurité vers un autre. Le procédé selon l'invention permet par exemple de transmettre des données non sensibles d'un SI de niveau de confidentialité élevé vers un réseau de niveau de confidentialité moindre. L'invention s'applique notamment au paramétrage de réseaux informatiques comprenant des équipements configurés pour manipuler des données sensibles du point de vue de leur confidentialité.

## Description

La présente invention concerne un procédé de transmission sécurisé de données d'un premier Système d'Information (noté « SI » dans la suite du texte) vers plusieurs SI de niveaux de sécurité hétérogènes. Par « sécurisé », on entend que le procédé prend en compte les risques de compromission de donnée d'un domaine de sécurité vers un autre. Le procédé selon l'invention permet par exemple de transmettre des données non sensibles d'un SI de niveau de confidentialité élevé vers un SI de niveau de confidentialité moindre, sans risquer de compromettre des données sensibles de ce premier. L'invention s'applique notamment au paramétrage de SI comprenant des équipements configurés pour manipuler des données sensibles du point de vue de leur confidentialité. Par « équipements », on entend tout matériel / logiciel composant un SI (par exemple, des postes informatiques, routeurs, pare feux, commutateurs).

Lorsqu'un SI manipulant des données confidentielles doit être paramétré, ou doit faire l'objet d'une reconfiguration de tout ou partie de ses équipements, des commandes de paramétrage sont exécutées à partir d'un centre de gestion distinct de ce SI. Le SI et son centre de gestion sont connectés par l'intermédiaire de moyens de filtrage permettant notamment de s'assurer que le domaine de gestion est protégé contre les attaques pouvant être portées depuis le SI géré.

Un problème apparaît lorsque plusieurs SI de niveau de confidentialité différents doivent être configurés. Par exemple, si un premier SI de niveau « secret » et un deuxième SI de niveau « diffusion restreinte » fonctionnant habituellement selon des modes correspondant à un régime nominal doivent être reconfigurés pour fonctionner en régime de crise, un opérateur doit dans un premier temps intervenir sur un premier centre de gestion apte à paramétrer le premier SI, puis dans un deuxième temps intervenir sur un deuxième centre de gestion apte à paramétrer le deuxième SI. Les centres de gestion sont séparés physiquement pour respecter des contraintes de sécurité, ce qui rend l'intervention laborieuse et augmente les risques d'erreurs du fait de la répétition des tâches à effectuer. Des risques d'incohérence sont même possibles lorsque les équipements des deux SI ont des adhérences fonctionnelles, comme le partage d'un même support de transmission (par exemple, un ensemble de fréquences radio). Les exigences de sécurité sont donc antinomiques avec les besoins de gestion et de reconfiguration efficace des réseaux.

Un but de l'invention est de proposer une méthode pour reconfigurer aisément plusieurs réseaux soumis à des contraintes de confidentialité hétérogènes, sans risquer d'altérer la sécurité de ces mêmes réseaux. A cet effet, l'invention a pour objet un procédé de transmission d'ensembles de données d'un même premier système d'information vers une pluralité de systèmes d'information destinataires de niveaux de sécurité hétérogènes, au moins un premier ensemble de données étant destiné à un réseau différent du réseau destinataire d'un deuxième ensemble de données, **caractérisé en ce qu'il** comporte les étapes suivantes :
■ pour chaque ensemble de données à transmettre, étiqueter les données en leur associant au moins un attribut marquant le niveau de sécurité du réseau destinataire dudit ensemble, ledit étiquetage étant effectué à partir d'un système informatique propre au dit niveau de sécurité et isolé informatiquement du premier système d'information,
■ émettre, à partir du premier système d'information les ensembles de données étiquetées, vers les systèmes d'information destinataires, des moyens de filtrage bloquant ou autorisant la transmission desdites données en fonction de l'attribut affecté et du niveau de sécurité du système d'information destinataire.

Le procédé de transmission de données selon l'invention permet de transmettre à partir d'un même système d'information des données vers des système d'information de niveaux de sécurité différents tout en garantissant un haut niveau de sécurité notamment grâce au découplage de l'étape d'association d'un attribut à des données - étape préparatoire dite « d'étiquetage » - de l'étape d'exploitation ces attributs - l'étape dite de déploiement. En effet, l'étape d'étiquetage est effectuée sur un poste totalement séparé du premier système d'information à partir duquel on souhaite émettre des données, ce qui limite les risques qu'un opérateur affecte un attribut erroné ou falsifié à des données.

Les moyens de filtrage peuvent bloquer les données dont l'attribut correspond à un niveau de sécurité supérieur au niveau de sécurité du système d'information destinataire auquel il est relié. Cela permet de diminuer les risques de compromission de données confidentielles vers des systèmes d'information non sécurisés.

Selon une mise en oeuvre selon l'invention, lors de l'étape d'étiquetage des données, à partir dudit premier système informatique, on authentifie par une signature numérique l'association des données avec leurs attributs de sécurité, en particulier l'attribut de niveau de sécurité. La signature permet de vérifier l'intégrité de l'étiquetage ainsi que son authenticité. L'opérateur humain en possession de la clé utilisée pour la signature peut être en outre responsabilisé puisque son identité est avantageusement associée à l'étiquette.

Selon une mise en oeuvre selon l'invention, les moyens de filtrage vérifient l'intégrité des données et leur origine (par exemple, l'identité du signataire) en vérifiant la signature numérique apposée sur les données et leur attribut associé. Cette mise en oeuvre diminue les risques de modification malveillante ou accidentelle des données. Elle permet également de s'assurer que la donnée a été étiquetée par du personnel autorisé (authentification).

Selon une mise en oeuvre selon l'invention, préalablement à l'étape d'étiquetage des données, on classe dans différentes catégories les ensembles de données en fonction de leur niveau de sensibilité, et on enregistre chacun des ensembles de données sur des supports d'enregistrement distincts correspondant chacun à un niveau de sécurité prédéfini, les ensembles de données enregistrés sur chacun desdits supports étant étiquetés indépendamment les uns des autres. L'utilisation de supports d'enregistrements distincts permet de mieux maîtriser les transferts de données d'un réseau à un autre et de diminuer les risques de confusions entre des données destinées à des réseaux de niveaux de sécurité différents. Selon une autre mise en oeuvre du procédé selon l'invention, les données sont transférées par l'intermédiaire d'une diode réseau, et non pas via des supports d'enregistrement amovibles tels que décrits précédemment. La diode réseau est un équipement de sécurité configurée de manière à n'autoriser que le transfert de données du système d'étiquetage vers le premier système d'information.

Selon une mise en oeuvre selon l'invention, les données transmises du premier système d'information vers au moins l'un des systèmes d'information destinataires sont des données de configuration des équipements informatiques présents dans ces systèmes d'information.

L'invention a également pour objet un système de transmission d'ensembles de données d'un même premier système d'information vers une pluralité de systèmes d'information destinataires de niveaux de sécurité hétérogènes, au moins un premier ensemble de données étant destiné à un système d'information différent du système d'information destinataire d'un deuxième ensemble de données, **caractérisé en ce qu'il** comporte des systèmes informatiques aptes, pour chaque ensemble de données à transmettre, à étiqueter les données en leur associant au moins un attribut marquant le niveau de sécurité du système d'information destinataire dudit ensemble, un système informatique étant propre au dit niveau de sécurité et isolé informatiquement du premier système d'information et des autres systèmes informatiques, ledit premier système d'information étant configuré pour émettre les ensembles de données étiquetées vers les réseaux destinataires, le système comprenant des moyens de filtrage aptes à bloquer ou autoriser la transmission desdites données en fonction de l'attribut affecté et du niveau de sécurité du système d'information destinataire.

Selon un mode de réalisation du système de transmission selon l'invention, le système informatique d'étiquetage est également isolé des systèmes d'information destinataires.

Selon un mode de réalisation du système de transmission selon l'invention, des équipements sont placés en interface entre le premier système d'information et chacun des systèmes d'information destinataires, chacun desdits équipements étant apte à bloquer les données dont l'attribut correspond à un niveau de sécurité supérieur au niveau de sécurité du système d'information destinataire auquel il est relié.

Selon un mode de réalisation du système de transmission selon l'invention, au moins un deuxième réseau parmi ladite pluralité de systèmes d'information est d'un niveau de sécurité inférieur au niveau de sécurité du premier système d'information.

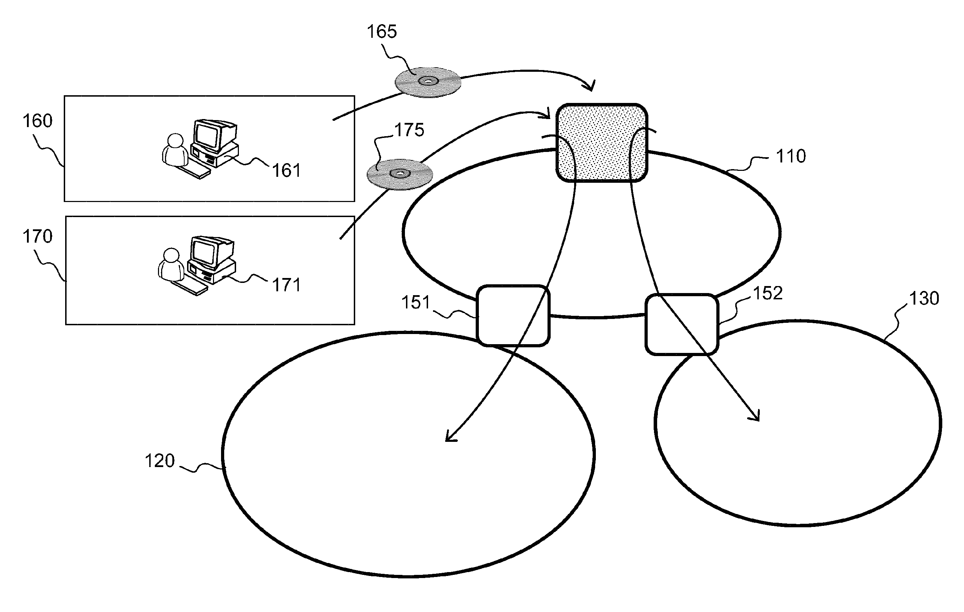

D'autres caractéristiques apparaîtront à la lecture de la description détaillée donnée à titre d'exemple et non limitative qui suit faite en regard de dessins annexés qui représentent :
- l'unique figure, un schéma représentant un exemple de système selon l'invention.

La figure présente un exemple de système selon l'invention. Le système comporte un premier sous système 110, dit « centre de gestion » 110, un SI 120 de niveau de confidentialité élevé, par exemple « secret », et un autre SI 130 de niveau de confidentialité inférieur, par exemple « diffusion restreinte ».

Le SI 120 et le SI 130 comportent des équipements, tels que des postes informatiques, routeurs et pare-feux, qui doivent être configurés et parfois reconfigurés en fonction du contexte d'utilisation. Afin de configurer ces SI 120, 130, le centre de gestion 110 est employé pour transmettre des commandes de paramétrage aux SI 120, 130. Classiquement, cette possibilité de configuration centralisée est totalement interdite, car elle pourrait être source de fuites de données du niveau « secret » vers le niveau « diffusion restreinte ».

Ces écueils sont évités notamment grâce à l'utilisation d'un procédé particulier d'étiquetage cryptographique de données. Une étape d'étiquetage permet d'associer à des données, des métadonnées - autrement dit, un ou plusieurs attributs, appelés aussi « étiquette » - comprenant au moins un indicateur du niveau de sécurité des données. Ainsi, les données non sensibles, telles que des données relatives à des paramètres de configuration d'un réseau informatique, peuvent être étiquetées comme non sensibles et faire l'objet d'un traitement particulier lorsqu'elles doivent transiter d'un SI à l'autre.

Ensuite, seules les données non sensibles du point de vue de la sécurité peuvent être transmises du centre de gestion 110 vers un SI, grâce à des passerelles de filtrage 151, 152 laissant transiter ou bloquant les données selon l'étiquette associée à ces données. Seules les données étiquetées comme étant d'un niveau de sécurité inférieur ou égal à celui du réseau vers lequel elles sont transmises peuvent transiter par la passerelle de filtrage 151, 152. Lorsque ces données sont associées à un niveau de sécurité supérieur à celui du réseau destinataire, ces données sont bloquées par la passerelle 151, 152.

Avantageusement, pour que l'étiquetage soit authentifiable et que son intégrité puisse être vérifiée, les métadonnées sont signées numériquement. Un opérateur disposant d'une clé secrète prend la responsabilité de l'exactitude de l'étiquetage en signant l'association entre les métadonnées et les données étiquetées. Cette clé est par exemple conservée sur un support d'enregistrement propre à l'opérateur responsable (par exemple, une carte à puce). Parallèlement, une clé permettant de vérifier la signature est accessible des passerelles 151, 152, lesquelles peuvent ainsi vérifier l'intégrité des données et des métadonnées, l'authenticité d'origine de ces métadonnées, puis effectuer les opérations de filtrage en fonction du contenu des métadonnées.

Conformément au procédé selon invention, l'étape d'étiquetage est effectuée de manière indépendante du centre de gestion 110 à partir duquel les données sont transmises aux SI 120, 130, afin d'éviter des erreurs de manipulation, un acte de malveillance ou, plus simplement, un dysfonctionnement ayant pour conséquence la fuite d'informations sensibles. Ainsi l'étape d'étiquetage est effectuée dans un environnement totalement isolé informatiquement (autrement dit, sans connexion réseau) de celui dans lequel est effectuée l'étape de filtrage des données.

De plus, l'étiquetage des données est effectué indépendamment pour chaque niveau de sécurité. Ainsi, un premier centre de personnalisation 160 dédié à l'étiquetage des données de niveau « secret » comprend une ou plusieurs machines 161 aptes à étiqueter des données avec un attribut « secret » sous le contrôle d'un opérateur qualifié disposant, pour l'authentification, d'une clé de chiffrement dédiée au niveau « secret » et permettant de signer cet étiquetage. Un deuxième centre de personnalisation 170 est dédié à l'étiquetage des données au niveau « diffusion restreinte » et utilise, pour l'authentification, une clé de chiffrement spécifique au niveau de sécurité « diffusion restreinte », donc différente de la clé de chiffrement utilisée dans le premier centre de personnalisation 160.

Les centres de personnalisation 160, 170 sont isolés informatiquement l'un de l'autre, de sorte à éviter le risque d'étiquetage erroné des données, c'est-à-dire l'association d'un niveau de sécurité incorrect à des données. Les données peuvent être reçues par le centre de personnalisation sous forme, par exemple, de données enregistrées sur un disque DVD ou une clé USB. Le support de données est pris en charge par un opérateur qui étiquette les données en fonction de leur sensibilité - dans l'exemple une seule étiquette peut être attribuée par centre de personnalisation. Il est à noter que grâce à la séparation des différents centres de personnalisation 160, 170, l'opérateur ne peut pas étiqueter les données selon une palette de niveaux de sécurité, mais peut simplement décider d'étiqueter une donnée selon le niveau de sécurité propre au centre de personnalisation. Ainsi, le centre de personnalisation produit en sortie un ensemble de données 165, 175 dont tout ou partie est étiqueté avec un attribut correspondant exclusivement au niveau de sécurité du centre de personnalisation.

L'étiquetage de données peut par exemple être effectué en utilisant un format du type XML DSIG (XML Signature Syntax and Processing).

A titre facultatif, d'autres métadonnées peuvent être créées au moment de l'étiquetage des données, comme par exemple l'auteur des données, leur date de création, la date d'apposition de l'étiquette. Ces métadonnées peuvent aussi être utilisées comme paramètres de filtrage lors des transferts entre SI différents.

A titre d'illustration, un exemple d'exécution du procédé selon l'invention est décrit ci-après. Lorsque les équipements des SI 120, 130 doivent être reconfigurés avec de nouveaux paramètres, une première étape préparatoire d'étiquetage est exécutée dans chacun des centres de personnalisation 160, 170. Un premier jeu de commandes destiné au SI de niveau « secret » 120 est fourni au premier centre de personnalisation 160, par exemple sur un support de type DVD. De préférence, soit les données sur ce support ont manifestement un niveau de sensibilité inférieur ou égal au niveau d'étiquetage, soit ces données sur ce support ont déjà préalablement été examinées pour s'assurer qu'aucune donnée d'un niveau plus sensible que le niveau d'étiquetage du centre de personnalisation n'existe. Un opérateur étiquette les données de paramétrage avec l'attribut « secret » en signant numériquement les associations entre données et attributs de sécurité. S'il existe un doute quant à la sensibilité de certaines données, l'étiquetage n'est pas effectué sur ces données. En outre, si le volume de données à étiqueter est très important, un automate peut être employé aux fins de l'étiquetage. Toutefois, les opérateurs devront veiller à ce que cet automate ne puisse pas recevoir de données sensibles en entrée. De manière indépendante, un deuxième jeu de commandes destiné au réseau de niveau « diffusion restreinte » 130 est étiqueté dans le deuxième centre de personnalisation 170. Chaque jeu étiqueté de commandes 165, 175 est ensuite chargé et exécuté à partir du même centre de gestion 110. Des erreurs à ce niveau sont alors sans conséquence sur la sécurité des réseaux 120, 130 puisque toute donnée transitant du centre de gestion 110 vers le SI 120 ou le SI 130 est l'objet d'un filtrage par des passerelles 151, 152 placées en interface entre le réseau de gestion 110 et les deuxième et troisième réseaux 120, 130.

L'exemple présenté précédemment concerne la transmission de données de commandes ou de paramétrage vers une pluralité de réseaux de niveaux de sécurité hétérogènes ; cet exemple n'est pas limitatif et le procédé selon l'invention peut être utilisé dans des contextes différents, dès lors qu'il s'agit de transmettre à partir d'un même centre, des données vers des réseaux de niveaux de sécurité hétérogènes.

## Revendications

1. Procédé de transmission d'ensembles de données (165, 175) d'un même premier système d'information (110) vers une pluralité de systèmes d'information destinataires (120, 130) de niveaux de sécurité hétérogènes, au moins un premier ensemble de données (165) étant destiné à un réseau différent (120) du réseau destinataire (130) d'un deuxième ensemble de données (175), **caractérisé en ce qu'il** comporte les étapes suivantes :
■ pour chaque ensemble de données à transmettre (165, 175), étiqueter les données en leur associant au moins un attribut marquant le niveau de sécurité du réseau destinataire (120, 130) dudit ensemble, ledit étiquetage étant effectué à partir d'un système informatique (160,170) propre au dit niveau de sécurité et isolé informatiquement du premier système d'information (110),
■ émettre, à partir du premier système d'information (110) les ensembles de données étiquetées (165, 175), vers les systèmes d'information destinataires (120, 130), des moyens de filtrage (151, 152) bloquant ou autorisant la transmission desdites données (165, 175) en fonction de l'attribut affecté et du niveau de sécurité du système d'information destinataire (120, 130).

2. Procédé selon la revendication 1, dans lequel les moyens de filtrage (151, 152) bloquent les données dont l'attribut correspond à un niveau de sécurité supérieur au niveau de sécurité du système d'information destinataire (120, 130) auquel il est relié.

3. Procédé selon la revendication 1 ou 2, dans lequel, lors de l'étape d'étiquetage des données, à partir dudit premier système informatique (160, 170), on authentifie par une signature numérique l'association des données avec leurs attributs de sécurité, en particulier l'attribut de niveau de sécurité.

4. Procédé selon la revendication 3, dans lequel les moyens de filtrage (151, 152) vérifient l'intégrité des données et leur origine en vérifiant la signature numérique apposée sur les données et leur attribut associé.

5. Procédé de transmission selon l'une quelconque des revendications précédentes, dans lequel, préalablement à l'étape d'étiquetage des données, on classe dans différentes catégories les ensembles de données (165, 175) en fonction de leur niveau de sensibilité, et on enregistre chacun des ensembles de données sur des supports d'enregistrement distincts correspondant chacun à un niveau de sécurité prédéfini, les ensembles de données enregistrés sur chacun desdits supports étant étiquetés indépendamment les uns des autres.

6. Procédé selon l'une quelconque des revendications précédentes, dans lequel les données transmises du premier système d'information (110) vers au moins l'un des systèmes d'information destinataires (120, 130) sont des données de configuration des équipements informatiques présents dans ces systèmes d'information.

7. Système de transmission d'ensembles de données (165, 175) d'un même premier système d'information (110) vers une pluralité de systèmes d'information destinataires (120, 130) de niveaux de sécurités hétérogènes, au moins un premier ensemble de données (165) étant destiné à un système d'information différent (120) du système d'information destinataire (130) d'un deuxième ensemble de données (175), **caractérisé en ce qu'il** comporte des systèmes informatiques (160, 170) aptes, pour chaque ensemble de données à transmettre (165, 175), à étiqueter les données en leur associant au moins un attribut marquant le niveau de sécurité du système d'information destinataire (120, 130) dudit ensemble, un système informatique (160,170) étant propre au dit niveau de sécurité et isolé informatiquement du premier système d'information (110) et des autres systèmes informatiques, ledit premier système d'information (110) étant configuré pour émettre les ensembles de données étiquetées (165, 175) vers les réseaux destinataires (120, 130), le système comprenant des moyens de filtrage (151, 152) aptes à bloquer ou autoriser la transmission desdites données en fonction de l'attribut affecté et du niveau de sécurité du système d'information destinataire.

8. Système de transmission selon la revendication 7, dans lequel le système informatique d'étiquetage est également isolé des systèmes d'information destinataires (120, 130).

9. Système de transmission selon la revendication 7 ou 8, dans lequel des équipements (151, 152) sont placés en interface entre le premier système d'information (110) et chacun des systèmes d'information destinataires (120, 130), chacun desdits équipements (151, 152) étant apte à bloquer les données dont l'attribut correspond à un niveau de sécurité supérieur au niveau de sécurité du système d'information destinataire (120, 130) auquel il est relié.

10. Système de transmission selon l'une quelconque des revendications 7 à 9, dans lequel au moins un deuxième réseau (130) parmi ladite pluralité de systèmes d'information (120, 130) est d'un niveau de sécurité inférieur au niveau de sécurité du premier système d'information (110).
